# EUROPEAN PATENT APPLICATION

(11) **EP 0 570 135 A2**
(43) Date of publication of application: **18.11.1993**
(21) Application number: 93303386.2
(22) Date of filing: 29.04.1993
(51) Int. Cl.: C08F 285/00, C08F 8/32, C08F 8/48

(54) **Impact modified polymer blends**

(30) Priority: 13.05.1992 US 882337
(71) Applicant: ROHM AND HAAS COMPANY, Philadelphia Pennsylvania 19105 (US)
(72) Inventor: Cohen, Leslie Alan, Langhorne, Pennsylvania 19053 (US); Freed, William Thayer, Stockton, New Jersey 08559 (US)
(74) Representative: Angell, David Whilton

(57) **Abstract**

Multistage impact modifiers for polyglutarimide and polyglutaric anhydride polymers which are resistant to reaction conditions typically found during production of the polyglutarimide and polyglutaric anhydride polymers comprise multi-stage polymer wherein the core comprises rubbery polymer, a subsequent stage is resistant to imidization and a further stage is compatible with the polyglutarimide, or glutaric anhydride polymer matrix.

## Description

This invention is concerned with impact modifiers for polyglutarimide or glutaric anhydride polymers.

There is strong interest in the marketplace for heat resistant plastics materials which also have impact resistance. A class of polymers which exhibits good thermal resistance are the polyimides, including especially those known as polyglutarimides. Unfortunately, one of the major drawbacks of unmodified polyglutarimides is their inherent brittleness, that is, their low impact resistance. A variety of modifiers have been incorporated into imide polymers in order to improve their impact resistance resulting in improved toughness and weatherability. One class of impact modifiers which has been shown to be useful for imides, particularly polyglutarimides, are the acrylic based multi-stage modifiers commonly referred to as "core/shell" modifiers. Such impact modifiers are generally incorporated into the polyglutarimide following imidization because of their sensitivity to the imidization reaction conditions. Typical imidization reaction conditions, and what will be termed "imidization", are described below.

U. S.-A-4,504,725 describes a thermoplastic resin composition with thermal stability and impact strength of (1) an imidized graft copolymer of a rubber-like polymer and a monomer mixture containing an aromatic vinyl monomer and an unsaturated dicarboxylic anhydride, (2) a graft copolymer of a rubber-like polymer and a vinyl monomer mixture, and/or (3) a vinyl monomer mixture. Relative proportions of (1) with (2) and/or (3) are adjusted to balance impact resistance, heat resistance, and moldability.

U.S.-A-4,217,424 describes impact modification of polyglutarimides by blending a mixture of two different multiple stage polymers, each with a rubbery core and hard polymer shell.

U.S.-A-4,436,871 and 4,254,232 describe polyglutarimide blends with impact modifiers, including multiple stage (core/shell) polymers.

Acrylic based core/shell impact modifiers have two major deficiencies limiting their use with polyglutarimides. First, as noted above, these modifiers must be post blended with polyglutarimides because of their reactivity under imidization conditions. That is, the rubbery core itself becomes imidized. Secondly, their compatibility with a variety of polyglutarimides is limited. Because of this limited compatibility, the core/shell modifier composition for each particular polyglutarimide must be optimized experimentally.

This invention is directed to the provision of multistage (core/shell) impact modifiers for polyglutarimides and polyglutaric anhydrides (hereinafter polyglutarimides or glutarimides) which will survive imidization conditions, especially of multistage impact modifiers which will be compatible with a variety of polyglutarimides, particularly impact modifiers for polyglutarimides which are compatible with other matrix polymers in polyglutarimide/polymer blends.

The present invention addresses this problem by providing, for polyglutarimide, impact modifiers having rubbery cores and multiple hard shells in which the cores are protected from imidization by at least one of the hard shells and in which at least one of the hard shells acts to compatibilize the impact modifier with the polyglutarimide matrix polymer. This invention also provides a process for impact modifying polyglutarimides by *in* *situ* formation of the impact modifier composition.

The polyglutarimides useful in this invention are known in the art. Preferred glutarimide polymers are those as described in U.S.-A-4,246,374 and U. S.-A-4,727,117. Modified glutarimide polymers such as those described in U.S.-A-4,254,232 and U.S.-A-4,217,424 are also preferred. These polyglutarimides are produced by reacting an acrylic polymer with anhydrous ammonia or an anhydrous primary amine, typically in an extruder. The resulting polymer contains imide units of the structural formula I. Alternatively, the acrylic polymer can be reacted with an anhydrous secondary amine (as described in U.S.-A-4,874,824) or heated in a devolatilizing extruder (as described in U.S.-A-4,742,123) to produce a polyglutaric anhydride which contains units of the structural formula II. 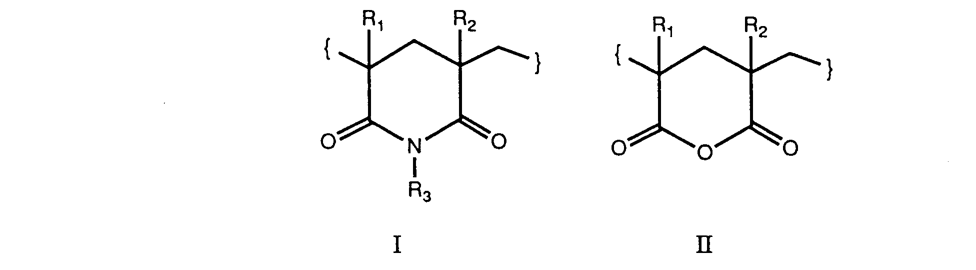
In both formulas I and II, R₁, R₂, and R₃ are the same or different radicals selected from hydrogen; C₁ to C₂₀ unsubstituted or substituted alkyl, such as, for example methyl, ethyl, propyl, isopropyl, butyl, hexyl, octyl, dodecyl, and the like; C₃ to C₇ cycloalkyl, such as, for example, cyclopropyl, cyclohexyl, and the like; and C₆ to C₁₀ aryl, such as, for example, phenyl, naphthyl, and the like. The impact modifiers of this invention are useful with both types of polymers or with mixtures thereof. Depending on the reaction conditions used, either polymer may contain various amounts of non-imidized units of formulas III or IV: 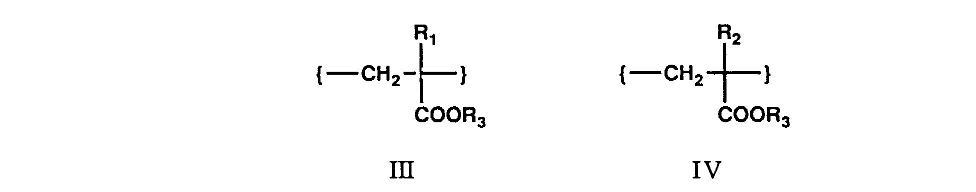
wherein R₁, R₂, and R₃ are as described above. Furthermore, depending on the composition of the initial polymer or polymer mixture employed and the imidization conditions used, the final product can contain units of any or all of formulas I, II, III, or IV.

In addition to the impact modifier described below, which is the subject of this invention, the final polymer compositions can also include typical additives known in the art, for example; additional impact modifiers such as ABS (acrylonitrile/butadiene/styrene), MBS (methyl methacrylate/butadiene/styrene), all acrylic types, and the like; fillers such as hydrated alumina, glass or other fiber reinforcements, talc or other minerals, metallic particles, and the like; colorants (e.g. pigments and dyes), toners, and color agents or concentrates such as those described in the Color Index (Society of Dyers and Colourists, U.S.A.), including Pigment Black 7, Pigment White 6, Pigment White 21, Pigment Green 7, Pigment Blue 15, Solvent Orange 60, Solvent Red 179, Solvent Green 28, Solvent Blue 45, Solvent Blue 101, Solvent Violet 14, Disperse Yellow 54, toner Irisol N™ (1-p-toluidino-4-hydroxyanthraquinone), and the like; lubricants such as high molecular weight alcohols (such as those with 12 - 24 carbons), esters (especially long-chain alkyl esters of high molecular weight acids including butyl or stearyl stearate), monoesters of glycols such as ethylene glycol monostearate, and the like; antioxidants such as organophosphites (such as tris(aryl)- or tris(alkylaryl)- or tris(alkyl)-phosphites), organophosphonites (such as trisaryl-, trisalkaryl-, or aryldialkaryl-phosphonites); thioesters (such as dilauryl thiodipropionate, ditridecyl thiopropionate, and distearyl thiodipropionate), and the like; and ultraviolet stabilizers such as hydroxybenzophenones, salicylate esters, benzotriazoles, hindered amines such as bis-(2,2,6,6-tetramethyl-4-piperidinyl)sebacate, 2,2,6,6-tetramethyl-4-piperidinyl benzoate, 1,2,3,4-tetrakis-(2,2,6,6-tetramethyl-4-piperidinyl)butane tetracarboxylate, 1,2-bis-(2-oxo-3,3,5,5-tetramethyl-1-piperidinyl) ethane, 1-(3,5-di-tert-butyl-4-hydroxyphenyl)-2,2-bis-(2,2,6,6-tetramethyl-4-piperidinyloxycarbonyl)-hexane, poly(1-oxyethylene-(2,2,6,6-tetramethyl-1,4-piperidinyl) oxysuccinyl), N,N'-bis-(2,2,6,6-tetramethyl-4-piperidinyl)-1,6- hexanediamine, and (4-hydroxy-2,2,6,6-tetramethyl-1-piperidinyl) ethane, and the like; blowing agents; flatting agents; antistatic agents; conductive materials; odor control agents; and the like.

The impact modifier of the invention is a multistage polymer which can be described as a low glass transition temperature (T_{g} less than 0° C.) rubbery core protected from imidization conditions by at least two shells; the first (innermost) is substantially inert to imidization conditions; the second (outermost) is capable of imidization. However, the actual morphology of the multistage polymer is unknown.

The rubbery core can be any butadiene or acrylic based polymer, copolymer, or polymer blend known in the art to have impact modifying properties when blended with polyglutarimides. The core polymer or copolymer may be crosslinked with a variety of crosslinking agents such as allyl methacrylate (ALMA), di-allyl maleate (DALM), trimethylol propane triacrylate (TMPTA), and the like. Preferred are butyl acrylate (BA) based cores. Most preferred are BA/TMPTA/DALM or BA/ALMA copolymers.

The innermost shell is comprised of polymer, copolymer, or polymer blend which will protect the core from reaction with the imidizing agent (eg., ammonia, primary, or secondary amines) present during imidization reactions. Preferred polymers include styrene based polymers or copolymers such as styrene, alpha-methyl styrene, styrene/acrylonitrile (SAN), and the like. Most preferred is SAN.

The outermost shell is comprised of polymer, copolymer, or polymer blend which is compatible with the glutarimide matrix polymer after imidization. Furthermore, the outermost shell may itself react with ammonia and/or primary or secondary amines to form a polyglutarimide and/or polyglutaric anhydride polymer or copolymer. Preferred are methacrylic or acrylic polymers, copolymers, or blends. Most preferred is polymethylmethacrylate (MMA).

Prior to imidization, the core/shell/shell impact modifier can be physically mixed with the polyglutarimide precursor polymer or copolymer. The precursor polymer is an acrylate or methacrylate polymer or copolymer containing units of formula III or IV as described above, and is also referred to as the matrix polymer. Less preferred is to blend imidized impact modifier with the polyglutarimide or polyglutaric anhydride itself (i.e. the matrix polymer after imidization). In the preferred mode, the blend of impact modifier and polyglutarimide precursor polymer is imidized to produce an impact modified polyglutarimide. The product is typically prepared by reacting the blend in an imidizing extruder under conditions which will imidize the outermost shell and the matrix polymer simultaneously. However, since even the protected impact modifier core will eventually react under the severe conditions of imidization, feed rates through the extruder must be high enough so that the residence time of the blend is insufficient for imidization of the core to occur.

This process has a number of benefits over the current practice of blending impact modifiers with polyglutarimides. First, the impact modifiers of this invention are compatible with a wide variety of polyglutarimides. This avoids the expensive and time consuming process of tailoring each impact modifier to each particular polyglutarimide. Secondly, *in situ* preparation of the imidized impact modifier during imidization of the matrix polymer avoids having to post blend the impact modifier with the polyglutarimide in a second extrusion. The process creates an intimate blend of imidized matrix polymer and imidized impact modifier which results in a highly impact resistant system with a very stable morphology. Finally, since the impact modifier's compatibility with the glutarimide matrix polymer is enhanced, it will also impact modify blends of the glutarimide with other polymers such as nylons, polyamides, poly(meth)acrylates, polyvinyl chloride, polycarbonates, polyesters, SAN, ABS, MBS, polyethylene terephthalate, polyvinylidine fluoride, chlorinated polyvinyl chloride, two- or three-stage core-shell all acrylic impact modifiers, and the like. Again, this avoids the expensive and time consuming process of discovering an optimum impact modifier for each polyglutarimide blend.

We have also discovered that in addition to the above noted benefits, presence of the impact modifier increases imidization efficiency over identical processing conditions in the absence of the impact modifier. This adds a further economic benefit by reducing production costs.

The polyglutarimide/impact modifier blends of this invention may be useful in any of various applications in which high heat resistance and impact strength are required. The compositions may be used alone or as components of blends with other matrix polymers such as, for example, nylons, polyamides, polyacrylates, polymethacrylates, polyvinyl chloride, polycarbonates, polyesters, SAN, ABS, MBS, polyvinylidene fluoride, chlorinated polyvinyl chloride, two- or three-stage core-shell all acrylic impact modifiers, polyvinylidene difluoride, and the like.

The polymers and blends of this invention may be used for automobile parts such as tail light lenses, instrument panels, deck shelves, interior post surrounds, window surrounds, air vents, visors, wheel covers, spoilers, wheel wells, head rests, protective grills, arm rests, fascia, seatbacks, rocker panels, bumpers, handles, interior and exterior trim, fasteners, body panels, fluid containers, distributor caps, valve covers, damping insulation, and the like; parts of electric or electronic devices such as cabinets or housings, circuit-board assemblies, lamps, supports for components, buttons or keys, outlet cover plates, and the like; construction uses such as windows, doors, window and door frames, siding, pipe, gutters, downspouts, ducts, traps, weatherstripping, gaskets, fencing, replacement for wooden railroad ties, plastic bricks, concrete filler, hardware fixtures such as cabinet hinges, axles, lock mechanisms, lavatory and bath units, and the like, consumer products such as trash disposal containers, camera, portable tape recorder, and VCR housings, housings for lawn mowers and snowblowers, lawn edging, washing machine tubs, attache cases, suitcases, shades, pump components, modular furniture, baskets, bowls, pots and containers for plants, open-structured containers, and the like; non-woven fabrics useful as clothing, sheets, bandages, carpet backing, doll hair, webbing, strapping, rope, twine, bristles, rugs, and the like; clear blends useful for glazing, drinking containers, light fixtures, lenses, watch crystals, laboratory ware, translucent or transparent medical ware, translucent or transparent food packaging, and the like; toys or recreational items such as molded dolls or toys, tricycle or bicycle components, interlocking building pieces, novelty items, encapsulated magnets, surfboards, boat decks, swimming pool floats or liners, frisbees, snow sliding toys, ski equipment, game boards, and the like; food applications such as containers, films for packaging, bags and other carriers, microwaveable cookware, and the like; medical devices and supplies such as containers, films, bags for drainage, ostomy, dialysis, and the like.

The following examples and comparative examples illustrate the present invention more specifically. The invention is in no way limited to these specific examples.

### Examples 1-4; Impact Strength Improvement

The multistage modifiers used in the following examples were prepared in accordance with the following procedure:

A rubbery monomer charge was emulsified using an alkali metal salt of dodecylbenzene sulfonic acid as the emulsifier. About 10 percent of the monomer was polymerized to form seeds and then the remainder of the rubbery monomer charge, along with other monomers and additives, as appropriate, was then added and polymerized, substantially to completion. The resultant polymer was retained in emulsion form and an increment of the appropriate second stage monomer or monomers was polymerized onto the particles to form the second stage. The third stage was formed in a similar manner. The composite multistage modifier was then isolated from the emulsion and dried under reduced pressure.

Each modifier was pre-mixed with polymethylmethacrylate and then melt blended at 400° - 450°C., in a 1.0" Killion extruder. The blend was then imidized using a 0.8'' twin screw counter-rotating extruder. Feed rates were as noted; reaction zone temperatures were 275° - 325° C.; pressures were 500 - 850 psi. Following imidization, the blend was fabricated into notched Izod bars and Dynatup plaques using a Newbury injection molding machine fitted with an ASTM standard 0.125" cluster mold.

Processing conditions were as follows:

| | |
|---|---|
| Metering (front) | 246°C. |
| Nozzle (variac) | 252°C. |
| Drying Temp. (overnight) | 65°C. |
| Mold Temp | |
| Stationary | 98°C. |
| Moveable | 96°C. |
| First Stage Injection (booster) | 20 sec. |
| Total Cycle | 45 sec. |
| Screw Speed | 50 rpm. |
| Back Pressure | 150 psig. |
| Injection (first stage) | 400 psig. |

In examples 1 - 4, the first stage was at a constant 37 volume percent rubber (ie. first stage). Imidizing extruder conditions were adjusted such that the product would have a Vicat in the range of 150°C.; the feed rate was 30 g/min.; 0.8'' extruder pressure was 400 psig.; and the imidization temperature was 275 - 290°C. Table 1 summarizes the notched Izod values (ft.-lb./in of notch at 23 ° C.) for these examples.

**TABLE 1**

| Ex. No. | Modifier Composition | Modifier Code | Izod Value |
|---|---|---|---|
| 1 | BA/TMPTA/DALM//MMA 64.35/0.33/0.33//35.0 | A | 0.48 |
| 2 | BA/TMPTA/DALM//SAN//MMA 59.4/0.3/0.3//15.0//25.0 | B | 1.90 |
| 3 | BA/TMPTA//MMA 79.12/0.88//20.0 | C | 0.62 |
| 4 | Control (no modifier) | N | 0.22 |

BA = butyl acrylate; TMPTA = trimethylol propane triacrylate; DALM = di-allyl maleate; MMA = methyl methacrylate; SAN = styrene acrylonitrile

The increased notched Izod value of example 2 shows the advantage of the imidized multistage modifier over the core/shell modifiers of examples 1 and 3.

### Examples 5-14; Effect of Imidization Exposure Time

In examples 5 - 14 the ratio of impact modifier to polymethylmethacrylate was 30/70 by weight. Imidizing extruder conditions were adjusted such that the percent imidization would be in the range of 43 - 62 percent. The melt blends were fed into the extruder at different rates in order to evaluate the effect of exposure time to imidization conditions. The effects of feed rate on physical properties of the resulting impact modified polyglutarimides are summarized in Table 2.

**TABLE 2**

| Feed | | | | | | | | |
|---|---|---|---|---|---|---|---|---|
| Dynatup | | | | | | | | |
| Ex.No. | Code | % Imide | Rate g/min | Izod | Tensile | | Max Load | Total Energy |
| | | | | | Break % | Yield psi | | |
| 5 | N | 57.0 | 100 | 0.27 | 5.55 | 13400 | 279.1 | 1.07 |
| 6 | N | 58.5 | 50 | 0.34 | 5.34 | 13270 | 249.1 | 0.86 |
| 7 | C | 39.8 | 100 | 0.42 | 2.81 | 0 | 156.0 | 0.72 |
| 8 | C | 48.9 | 100 | 0.48 | 2.59 | 0 | 190.6 | 0.99 |
| 9 | C | 53.2 | 50 | 0.41 | 3.43 | 0 | 184.9 | 0.63 |
| 10 | C | 61.8 | 50 | 0.44 | 2.90 | 0 | 160.5 | 0.59 |
| 11 | B | 57.9 | 50 | 0.41 | 2.53 | 0 | 139.5 | 0.50 |
| 12 | B | 42.9 | 100 | 0.42 | 47.9 | 9250 | 355.0 | 1.56 |
| 13 | B | 45.5 | 100 | 0.42 | 59.9 | 9150 | 377.6 | 1.68 |
| 14 | B | 53.5 | 100 | 0.42 | 37.1 | 8910 | 413.5 | 2.99 |

Notched Izod in ft.-lb./in of notch at 23°C.; Tensile strength in % elongation at break and yield in psi, and Dynatup impact maximum load in lbs. and total energy in in-lbs.

Although notched Izod impact values do not vary significantly (due to low loadings of the modifier), there is a dramatic increase in tensile strength (elongation to break), and Dynatup impact strength with higher feed rates (compare example 11 to examples 12-14). This dramatic increase is not observed with the core/shell modifier "C" (compare examples 9-10 to examples 7-8).

### Examples 15-20; Improved Compatibility

Examples 15 - 20 demonstrate the value of an outer shell which can be imidized to improve compatibility. Modifiers used in these examples were blended with polymethylmethacrylate at a ratio of 40/60 by weight; the feed rate was 90 g/min.; the imidization conditions were adjusted to give 48 - 52 percent imidization. Physical properties of the resulting polyglutarimides are summarized in Table 3.

**TABLE 3**

| | | | Dynatup | | |
|---|---|---|---|---|---|
| Ex.No. | Modifier Composition | (Code) | Max Izod | Max Izod | Energy |
| 15 | Control | (N) | 0.35 | 194.1 | 0.60 |
| 16 | Control | (N) | 0.34 | 258.4 | 1.03 |
| 17 | BA/TMPTA//MMA 79.12/0.88//20.0 | (C) | 0.43 | 81.31 | 0.39 |
| 18 | BA/TMPTA//MMA 79.12/0.88//20.0 | (C) | 0.43 | 83.51 | 0.42 |
| 19 | BA/ALMA//SAN//MMA 69.31/0.49//11.33/3.77//15.1 | | 0.84 | 222.95 | 1.37 |
| 20 | BA/ALMA//SAN 87.38/0.62//9.0/3.0 | | 0.89 | 174.8 | 1.32 |

The three stage modifier (19), although containing 18% less rubber than the corresponding two stage modifier (20) still has a comparable notched Izod value. The three stage modifier is also significantly better than a two stage modifier (17 and 18).

## Claims

1. A multistage polymer comprising first stage rubbery polymer, subsequent stage polymer resistant to imidization, and a further stage polymer comprising units of formula I or II or both I and II, 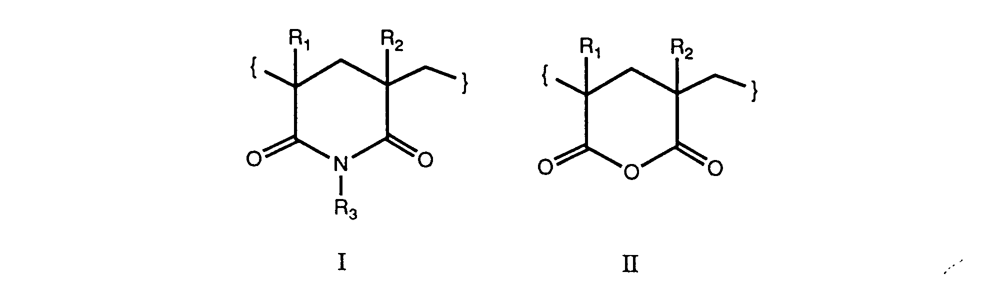 and, optionally, further comprising units of formulas III or IV or both III and IV, 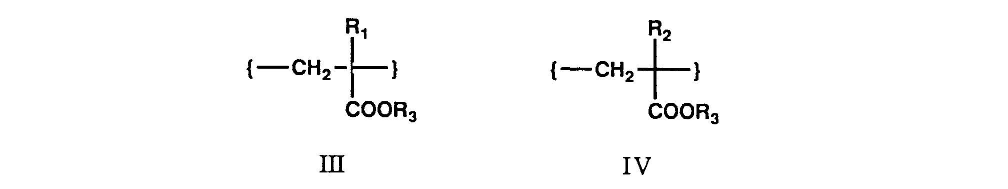 and, wherein R₁, R₂, and R₃ are the same or different radicals selected from hydrogen, C₁ to C₂₀ unsubstituted or substituted alkyl, C₃ to C₇ cycloalkyl, and C₆ to C₁₀ aryl.

2. A polymer as claimed in Claim 1 wherein R₁, R₂, and R₃ are the same or different radicals selected from hydrogen, (C₁ to C₄) alkyl, cyclohexyl, and phenyl.

3. A polymer as claimed in Claim 1 or 2 wherein:
a. the first stage is selected from polymers containing units derived from at least one of butadiene, acrylic esters, methacrylic esters, styrene, and copolymers thereof; and
b. the subsequent stage is selected from polymers of styrene, alphamethylstyrene, styrene/acrylonitrile, and copolymers thereof.

4. A polymer as claimed in any preceding Claim wherein the first stage is from 40 to 90 weight percent, the subsequent stage is from 10 to 50 weight percent, and the further stage is from 10 to 50 weight percent of the total weight of the multistage polymer.

5. A polymer as claimed in any preceding Claim wherein the first stage is from 50 to 80 weight percent, the subsequent stage is from 10 to 35 weight percent, and the further stage is from 10 to 35 weight percent, of the total weight of the multistage polymer.

6. A polymer as claimed in any preceding Claim wherein the first stage is rubbery polymer comprising a polybutyl acrylate, the second stage is copolymer comprising styrene/acrylonitrile and the third stage is polymer comprising units of formula I or II or both I and II and, optionally, further comprising units of formula III or IV or both III and IV.

7. A polymer as claimed in any preceding Claim wherein the subsequent stage is the second stage and the further stage is the third stage.

8. A composition comprising a blend of:
a. from 1 to 99 parts by weight of one or more polymers independently comprising units of formula I, units of formula II, or units of both formulas I and II, 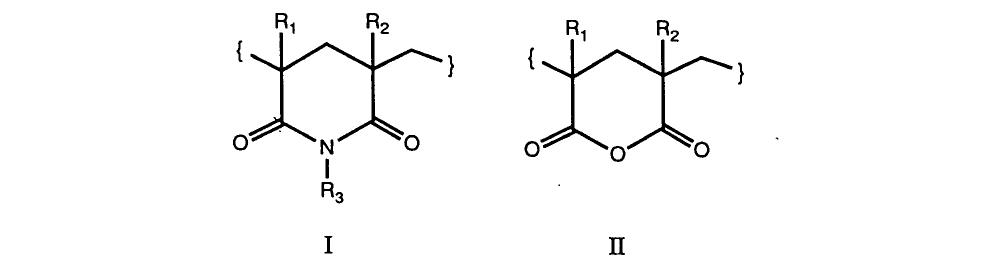 and, optionally, further comprising units of formulas III or IV or both III and IV, 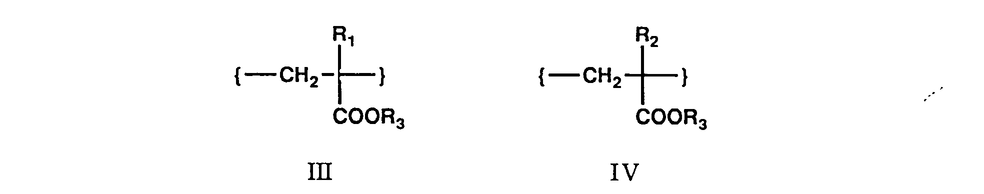 and, wherein R₁, R₂, and R₃ are the same or different radicals selected from hydrogen, C₁ to C₂₀ unsubstituted or substituted alkyl, C₃ to C₇ cycloalkyl, and C₆ to C₁₀ aryl, and
b. from 99 to 1 parts by weight of multistage polymer as claimed in any preceding claim.

9. A method of producing impact modified polyglutarimide or polyglutaric anhydride polymers comprising:
a. mixing acrylic or methacrylic polymer with multistage polymer comprising a first stage rubbery polymer, a subsequent stage polymer resistant to imidization, and a further stage acrylic or methacrylic polymer, and,
b. treating the mixture with primary or secondary amine.

10. A method as claimed in Claim 9 wherein the mixture is treated with primary or secondary amine in an extruder.
